# EUROPEAN PATENT SPECIFICATION

(11) **EP 2 279 097 B1**
(45) Date of publication and mention of the grant of the patent: **03.04.2013**
(21) Application number: 09729359.1
(22) Date of filing: 07.04.2009
(51) Int. Cl.: B21B 23/00, B21D 5/08, B60R 19/18

(54) **ENERGY ABSORBING BEAM WITH CONTROLLED CRUSH CHARACTERISTICS**
ENERGIEABSORBIERENDER HOLM MIT KONTROLLIERTEN KNAUTSCHEIGENSCHAFTEN
POUTRE D'ABSORPTION D'ÉNERGIE AYANT DES CARACTÉRISTIQUES D'ÉCRASEMENT CONTRÔLÉ

(30) Priority: 10.04.2008 US 43837
(43) Date of publication of application: 02.02.2011
(73) Proprietor: Accra Teknik AB, 943 31 Öjebyn (SE)
(72) Inventor: VIKSTROM, Thomas, Troy, MI 48084 (US)
(74) Representative: Müller, Eckhard
(86) International application number: PCT/US2009/039758
(87) International publication number: WO 2009/126617

(56) References cited:
- WO-A1-01/44018
- DE-A1- 2 949 875
- JP-A- 2001 260 774
- US-A- 5 803 517
- US-A- 6 000 738
- US-A1- 2004 169 380
- US-A1- 2005 213 478
- US-B1- 6 349 521
- US-B2- 6 971 690

## Description

### FIELD OF THE INVENTION

This invention relates, generally, to energy absorbing structures. More specifically the invention relates to energy absorbing beams of the type incorporated into motor vehicles. Most specifically the invention relates to energy absorbing beams having controlled crush characteristics.

### BACKGROUND OF THE INVENTION

Motor vehicles and other articles of construction can incorporate energy absorbing protective structures therein. These structures are frequently configured as beams, and in the context of this disclosure the energy absorbing structures of the present invention will be referred to as "beams", and it is to be understood that they may be variously configured. In the case of motor vehicles, the beams are incorporated into bumper systems, side intrusion protection systems, and other portions of the body of a motor vehicle, and function to protect users and cargo in the event of a high energy impact, by absorbing and dispersing kinetic energy. Weight is a significant concern in motor vehicles, and hence the strength to weight ratio of energy absorbing beams is significant. Document DE 2949875 A1 discloses an energy absorbing structure according to the preamble of claim 1. Document US 2004/0169380 A1 discloses an energy absorbing structure where first and second hollow flanges are shown which are not separate from one another and from the interior portion of the remainder of the beam.

As will be explained hereinbelow, the present invention provides a unique structure of energy absorbing beam. The beams of the present invention are specifically configured so that when they are impacted, they crush in a very controlled and repeatable manner so as to absorb and dissipate energy in an efficient manner. The beams of the present invention are light in weight but capable of absorbing and dissipating very large amounts of energy. These and other advantages of the invention will be apparent from the drawings, discussion and description which follow.

### SUMMARY OF THE INVENTION

Disclosed herein is an energy absorbing structure having controlled crush characteristics. The structure is configured as an elongated beam wherein at least a portion of the length of the beam is configured so that a cross section thereof taken transverse to the length of the beam defines a first sidewall, a second sidewall, a first hollow flange projecting from the first sidewall, a second hollow flange projecting from the second sidewall, and a front wall extending between said first and second sidewalls. The structure further includes a rear wall extending between said first sidewall and said second sidewall wherein at least a portion of the length of the rear wall is spaced from the front wall.

The flanges may, project from their respective sidewalls, and from the rear wall in a direction transverse to the length of the beam. The flanges may be separated from their respective sidewalls, and any rear wall, by a channel which extends in a direction along the length of the beam.

In particular instances, the beam is configured to include a first and second sidewall, a front wall and a rear wall which define a single lobe which comprises a central portion of the beam. In other instances, the sidewalls, front wall and rear wall will define a multi-lobe which comprises a central portion of the beam.

In yet other instances, a portion of the length of the front wall may be indented so that the indented portion is closer to a rear wall than is the remainder of the front wall. The beam may be configured to have a cross section which is closed or open, and in yet other instances, at least one of the sidewalls may be configured to define a first and second planar portion which join together in an angular relationship so as to define a break point therebetween which aids in controlling the crush characteristics of the beam.

The beam may be fabricated from steel, and in particular instances it may be fabricated from high strength boron steel. The thickness of the steel may be in the range of 0.5 to 5.0 millimeters.

Further disclosed are methods for forming the beams wherein at least portions of the beams are fabricated from sheets of stock material in a roll forming process. Further disclosed are motor vehicles which include the energy absorbing beams of the present invention.

### BRIEF DESCRIPTION OF THE DRAWINGS

Figure 1 is a cross-sectional view of a first configuration of energy absorbing beams structured in accord with the principles of the present invention;

Figure 2 is a perspective drawing of a portion of a beam generally similar to the beam of Figure 1;

Figure 3 is a cross-sectional view of another configuration of beam structured in accord with the principles of the present invention;

Figures 4A-4D are cross-sectional views of an embodiment of single lobe beam in accord with the present invention at various stages of crushing as would occur in a high-speed impact;

Figures 5A-5B are cross-sectional views of a multi-lobe beam of the present invention at various stages of crushing as would occur in a high-speed impact;

Figure 6A is a graph showing the crush behavior of beams of the present invention and beams of the prior art under low speed crash conditions;

Figure 6B is a graph showing behavior of a beam of the present invention and a beam of the prior art under medium speed crash conditions; and

Figures 7-9 are force/displacement curves comparing the crash behavior of lobed beams of the present invention with corresponding non-lobed beams of the prior art.

### DETAILED DESCRIPTION OF THE INVENTION

The energy absorbing structures of the present invention may be fabricated in a variety of configurations; but in general, they comprise elongated beam members in which at least a portion of the length of the beam has a cross section, taken transverse to the length of the beam, which is tubular, insofar as it at least partially encloses an interior space. As such, the cross section may be completely closed or may be open to some degree. Also, while the cross section is described as "tubular", it is to be understood that it need not be circular or otherwise curved. The cross-sectional portion defines a first sidewall having a first hollow flange projecting from it transverse to the length of the beam. The cross section further defines a second sidewall having a second hollow flange projecting from it transverse to the length of the beam. A front wall extends between the first and second sidewalls, and a rear wall extends between the first and second sidewalls. At least a portion of the length of the rear wall is spaced from the front wall. Some particular configurations of energy absorbing beam are shown in the accompanying figures.

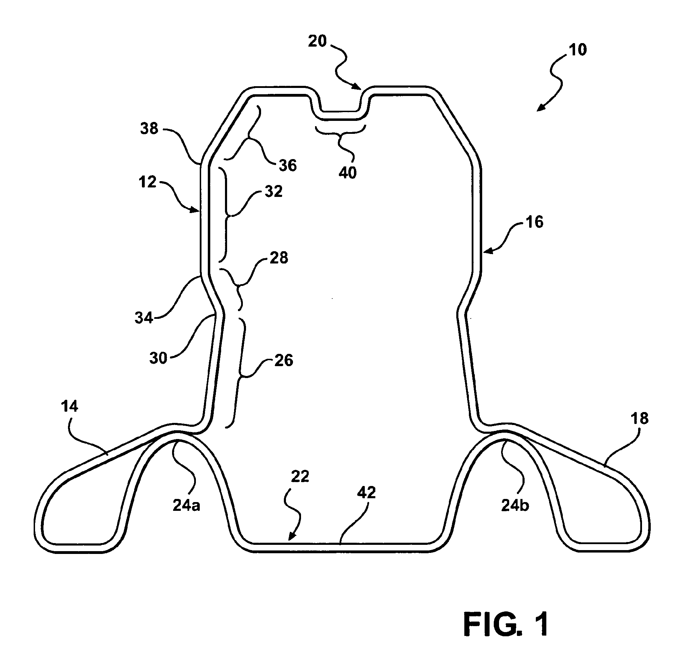

Figure 1 shows a cross-sectional view of a first configuration of beam 10. The beam includes a first sidewall 12 having a first hollow flange 14 projecting therefrom. The beam further includes a second sidewall 16 having a second hollow flange 18 projecting therefrom. A front wall 20 extends between the first sidewall 12 and the second sidewall 16. Likewise a rear wall 22 extends between the first sidewall 12 and the second sidewall 16. In the Figure 1 illustration, the hollow flanges 14 and 18 are separated from the rear wall 22 and the sidewalls 12 and 16 by grooves 24a, 24b which extend along the length dimension of the beam 10.

It will also be seen from Figure 1 that the interior portions of the hollow flanges 14, 18 are separate from the interior portions of the remainder of the beam as bounded by the sidewalls 12, 16, front wall 20 and rear wall 22.

It should be noted that terms such as: "front", "top", "bottom", "rear" and "back" as applied to the walls, are relative and are used for purposes of reference and description herein. These terms are not meant to imply any specific orientation of the beam when in use; and as such, these terms are interchangeable.

As will further be seen, the sidewalls 12 and 16 each include a plurality of generally planar portions which join together in an angular relationship so as to define break points. Specifically, sidewall 12 includes a first planar portion 26 which joins to a second planar portion 28 in an angular relationship defining a first break point 30. Likewise, the second planar portion 28 joins to a third planar portion 32 to define another break point 34. Likewise, the third planar portion 32 joins to a fourth planar portion 36 to define yet another break point 38. The second side wall 16 is similarly configured. It should be noted that while the embodiments of Figures 1-3 show a plurality of break points on each of the side walls, other embodiments may include only a single break point; and in some instances, the beam may include no break points. In the Figure 1 embodiment, the front wall 20 is configured so that a central portion 40 projects inward in the direction of the rear wall 22 so as to define a channel. In other embodiments, the front wall 20 may be configured to define a plurality of channels, or it may not define a channel at all.

In the Figure 1 embodiment, the sidewalls, front wall, and rear wall cooperate to define a single lobed central portion which, in this instance, bounds a completely closed volume; and in this regard, portions of the rear wall 22 are joined together by a weld 42. In other embodiments, the profile of the cross section may be open.

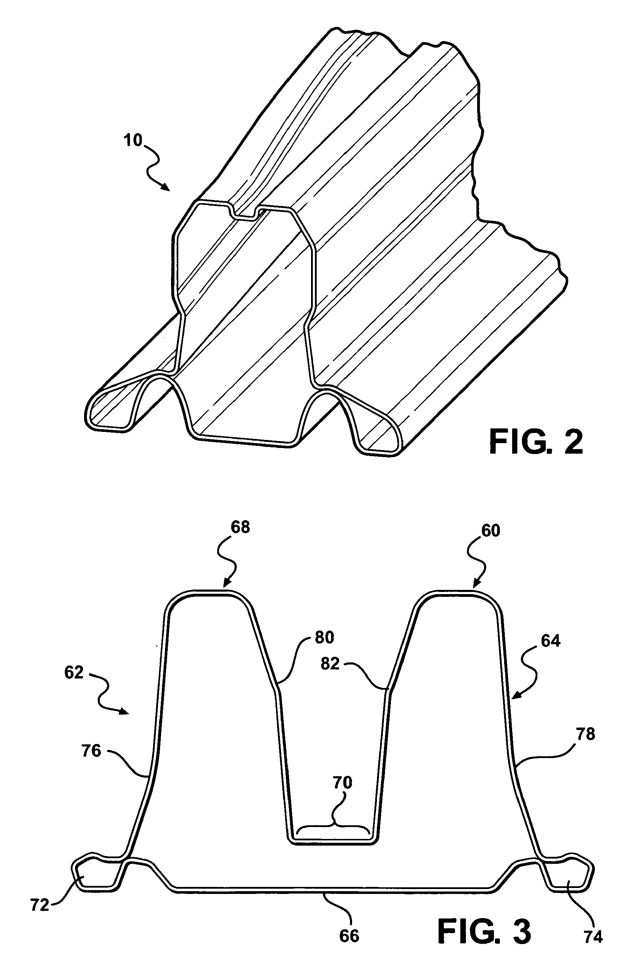

Referring now to Figure 2, there is shown a perspective drawing of a portion of the beam 10 of Figure 1. As will be seen, the cross section of the beam may vary along its length, and the beam may include attachment features such as flanges, brackets or the like. Also, the beam may be curved, swept, bent, or otherwise shaped to accommodate particular applications. The beams of the present invention may be fabricated in a variety of processes. However, in some specific instances, the beams are advantageously fabricated, at least in part, by a roll forming process wherein a sheet of stock material is sequentially shaped through a series of rolling stations to produce the final cross-sectional profile. In further processing steps, the thus formed beam stock may be further shaped by sweeping, bending, or the like to produce a finished article. As is known in the art, appropriate heat treating or other metallurgical operations may be carried out to enhance the strength, ductility, or other metallurgical properties of the resultant article.

The beams of the present invention are fabricated from materials having controlled deformation characteristics. These materials will typically be metals, although polymeric materials and composite materials may also be employed. In some instances, the beams will be fabricated from steel stock. In specific instances they will be fabricated from steel stock having a thickness in the range of 0.5 to 5.0 millimeters. In certain instances, the beams will be fabricated from a high strength steel such as an ultra high strength boron steel.

Various other configurations of beam cross section may be readily implemented in accord with the present invention. Referring now to Figure 3, there is shown a cross-sectional view of another configuration of beam 60 in which the sidewalls, front wall and rear wall cooperate to define a multi-lobe structure; and in this specific instance, a dual lobed structure. This beam includes a first sidewall 62, a second sidewall 64 and a rear wall 66 as previously described. In this embodiment, the front wall 68 has a deeply indented portion 70 which projects toward the rear wall 66 and is closer thereto than is the remainder of the front wall. As shown in this embodiment, the indented portion 70 is spaced from the rear wall 66; however, it is to be understood that in some instances, it may actually be in contact with the rear wall 66, or it may be spaced further therefrom. In yet other embodiments, the front wall may be configured to include several indented portions so as to define a third lobe or further numbers of lobes. Also, it is to be understood that the rear wall 66 need not be planar as illustrated herein, but may also be indented or otherwise configured.

As in the previous embodiments, the beam 60 includes first and second flanges 72, 74 and the sidewalls are configured to include break points 76, 78. In this embodiment, the portions of the front wall which are projecting into the central portion of the cross section are configured so as to define additional break points 80 and 82.

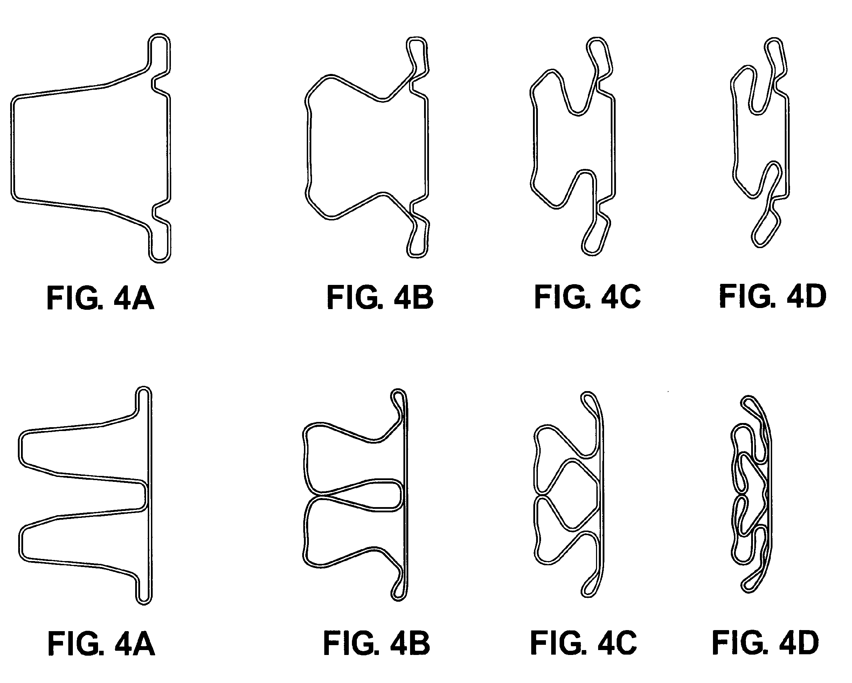

The beam structures of the present invention are uniquely configured and their configuration allows them to crush in a very controlled and repeatable manner when subjected to an impact. The controlled crushing characteristics allow the beams to absorb and dissipate high levels of kinetic energy with regard to their weight. Figures 4A-4D show the behavior of a typical single lobe beam of the present invention under high speed impact crush conditions. Likewise, Figures 5A-5B depict the behavior of a typical multi-lobe beam of the present invention under similar high speed impact conditions. As will be seen, in both instances the beam collapses in a very controlled manner thereby absorbing large amounts of kinetic energy.

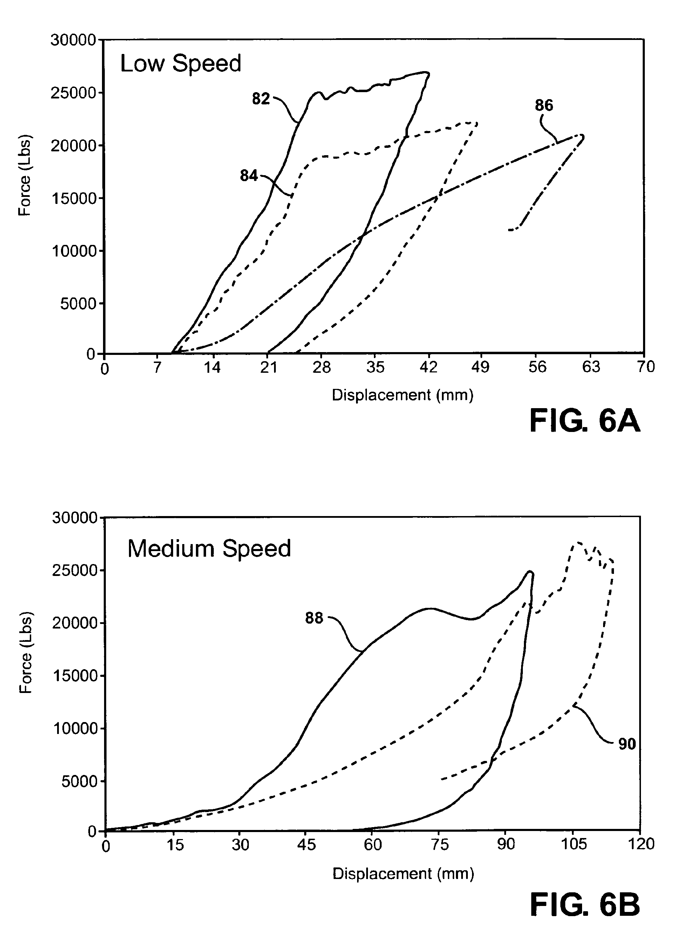

Figure 6A is a graph depicting crash data of a number of bumper beams in a five mile per hour flat barrier simulated, low speed crash. The graph shows the displacement of a test fixture having a beam mounted thereupon, as a function of applied force. Curve 82 shows test data for a single lobe beam fabricated from 1.3 millimeter thick steel stock. As will be seen, the beam is capable of absorbing relatively large amounts of enegry. Curve 84 shows the crash behavior of a single lobe beam of the present invention fabricated from 1.1 millimeter thick steel stock. Again, it will be seen that this beam, although relatively lighter, also absorbs large amounts of energy. Curve 86 shows data for a corresponding bumper beam of the prior art. As will be seen, this beam absorbs far less energy and allows for more displacement than do either of the beams of the present invention. It is also significant that the beam of the prior art as represented by curve 86 has a weight of 6,17 kg [13.6 pounds], while the 1.3 millimeter thick beam of the present invention as represented by curve 82 has a weight of 5,44 kg [12 pounds] and the 1.1 millimeter thick beam of the present invention as represented by curve 84 has a weight of 4,54 kg [10 pounds]. Therefore, it will be seen that the beams of the present invention not only absorb more energy than does the beam of the prior art, they are also significantly lighter. This factor is very significant in motor vehicle design, since the use of the beams of the present invention not only lightens overall vehicle weight, thereby increasing fuel efficiency, but also increases safety factors.

Referring now to Figure 6B there is shown the medium speed impact behavior of a beam of the present invention at curve 88, and a beam of the prior art at curve 90. The beam of the present invention has an overall weight of 5,26 kg [11.6 pounds] and the beam of the prior art has an overall weight of 6,89 kg [15.2 pounds]. In the experimental series of Figure 6B, impact occurred at a speed 4,47 m/g [10 miles per hour] at a 40% offset. As will be seen from Figure 6B, the beam of the present invention as represented by curve 88 absorbs more energy and allows for less deformation than does the beam of the prior art as represented at curve 90. Furthermore, the beam of the present invention is significantly lighter than the beam of the prior art.

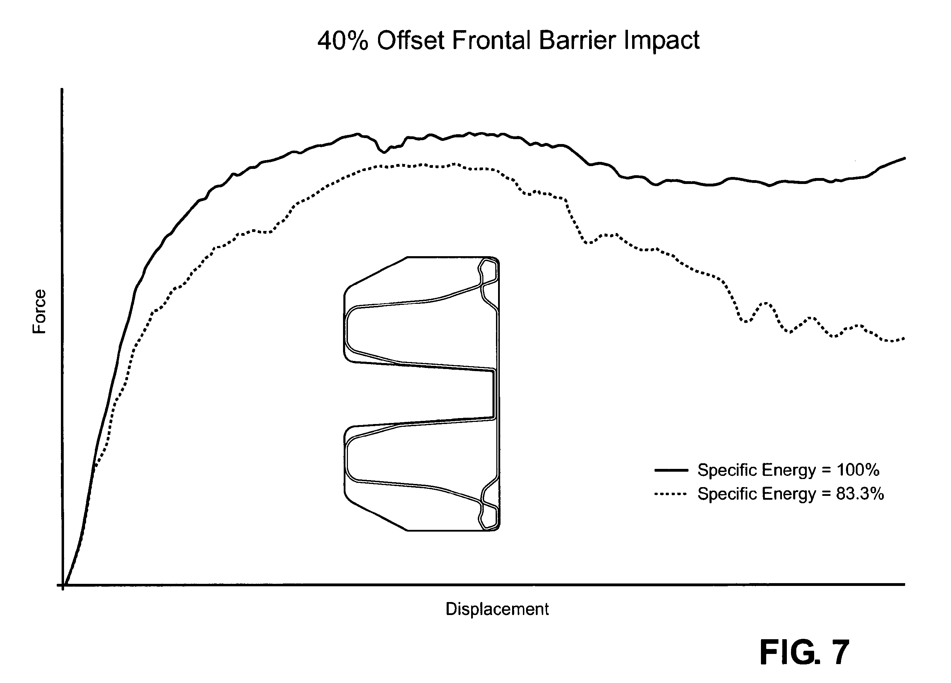

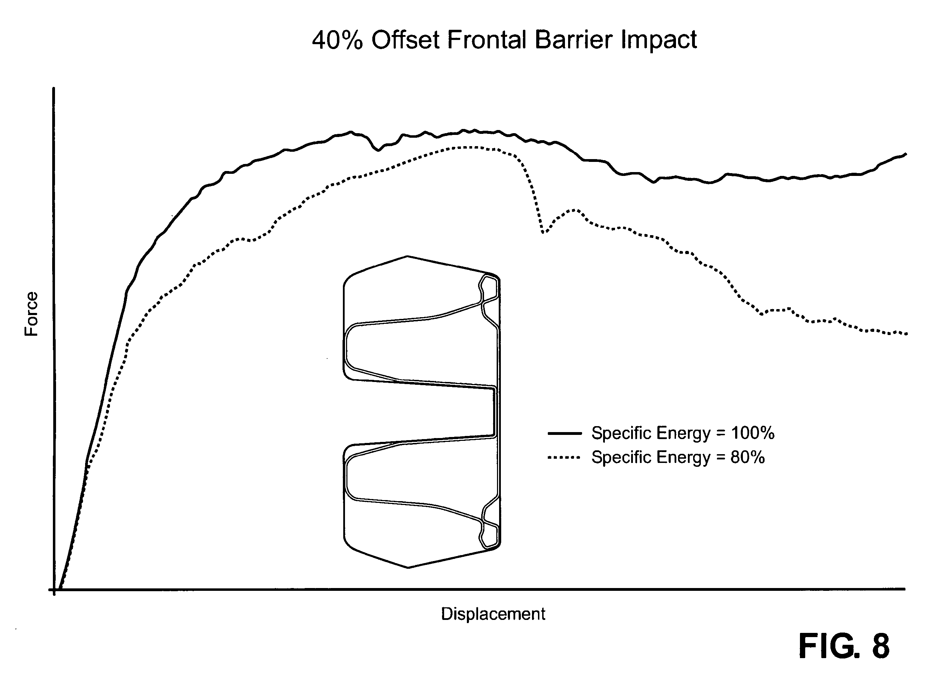

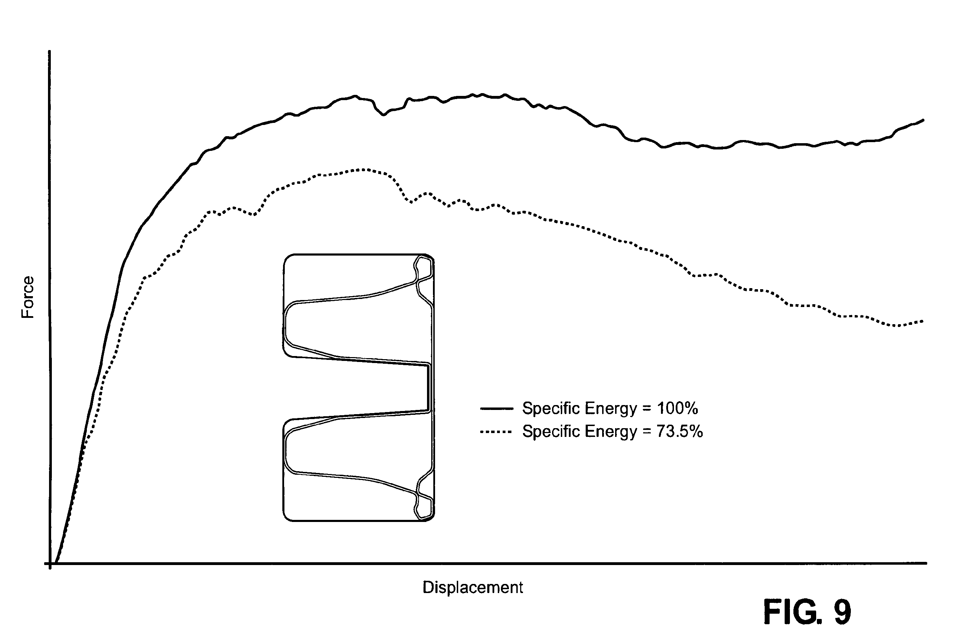

Figures 7-9 depict the crush behavior in terms of force/displacement for paired sets of beam structures. In each pair, one member comprises a flanged beam structure in accord with the present invention and the other member comprises a non-flanged beam structure which is otherwise generally similar to the flanged structure of the present invention. The force/displacement curve for the flanged member of each pair is shown by a solid line, and the force/displacement curve for the non-flanged member is shown by the dotted line. The values of the specific energy for the flanged member are normalized to 100% for each pair, and the specific energy for the corresponding non-flanged member is scaled accordingly. In each case, it is clear that the beam structure of the present invention allows for significantly more energy absorption. As will be seen, the beams of the present invention absorb more energy per unit mass than do corresponding prior art beams. As such, the beams of the present invention have higher specific energy absorptions. The beams of the present invention thus may be made to be lighter in weight than prior art beams, without sacrificing any energy absorbing capacity. Alternatively, the beams may be used to provide enhanced strength to vehicles.

## Claims

1. An energy absorbing structure having controlled crush characteristics, said structure comprising: an elongated beam, at least a portion of the length of said beam (10) being configured so that a cross section thereof taken transverse to the length (14) of said beam defines a first sidewall (12), a second sidewall (16), a first hollow flange projecting from said first sidewall (17), a second hollow flange (18) projecting from said second sidewall (16), and a front wall (20) extending between said first and second sidewalls (12, 16), wherein said beam (10) being further configured so that the respective interior volumes of said first and second hollow flanges (14, 18) are separate from one another and from the interior portion of the remainder of the beam (10) **characterized in that** said structure further including a rear wall (22) extending between said first sidewall (12) and said second sidewall (16), at least a portion of the length of said rear wall (22) being spaced from said front wall (20).

2. The structure of claim 1, wherein said flanges (14, 18) project from their respective sidewalls (12, 16), and from the rear wall (22), in a direction transverse to the length of the beam (10), and are separated from their respective sidewalls (12, 16) and the rear wall (22) by a channel which extends in a direction along the length of the beam (10).

3. The structure of claim 1, wherein said first and second sidewalls (12, 16), said front wall (20), and said rear wall (22) define a single lobe which comprises a central portion of said beam (10).

4. The structure of claim 1, wherein said first and second sidewalls (12, 16), said front wall (20), and said rear wall (22) define a multi-lobe which comprises a central portion of said beam (10).

5. The structure of claim 4, wherein a portion of the length of said front wall (20) is indented so that said indented portion is closer to said rear wall (22) than is the remainder of said front wall (20).

6. The structure of claims 1 thru 5, wherein said cross section is a closed cross section.

7. The structure of claims 1 thru 5, wherein said cross section is an open cross section.

8. The structure of claims 1 thru 5, wherein at least one of said sidewalls (12, 16) comprises a first planar portion (26) and a second planar portion (28) which joins said first planar portion (26) in an angular relationship, so as to define a break point (30) therebetween.

9. The structure of claims 1 thru 5, wherein said beam (10) is fabricated from steel, for example an ultra high strength boron steel.

10. The structure of claim 9, wherein said steel has a thickness in the range of 0.5 to 5.0 millimeters.

11. The structure of claims 1 thru 10, wherein said structure is fabricated, at least in part, from a roll formed sheet of stock material.

12. The structure of claims 1 thru 11, wherein said beam (10) is configured as a bumper beam for a motor vehicle.

13. A vehicle which includes the structure of claims 1 thru 12.

14. A method for fabricating an energy absorbing structure having controlled crush characteristics, said method comprising the steps of: providing a sheet of stock material; shaping said sheet of stock material, at least in part, in a roll forming process so as to define an elongated beam (10), at least a portion of the length of said beam (10) being configured so that a cross section thereof taken transverse to the length of said beam (10) is configured to define a first sidewall (12), a second sidewall (16), a first hollow flange (14) projecting from said first sidewall (12), a second hollow flange (18) projecting from said second sidewall (16), and a front wall (20) extending between said first and second sidewalls (12, 16), wherein said beam (10) being further configured so that the respective interior volumes of said first and second hollow flanges (14, 18) are separate from one another and from the interior portion of the remainder of the beam, **characterized in that** said beam being further configured that a rear wall (22) is provided which extends between said first sidewall (12) an said second sidewall (16), at least a portion of the length of said rear wall (22) being spaced from said front wall (20).

## Patentansprüche

1. Energieabsorbierende Struktur, die kontrollierte Knautscheigenschaften aufweist, wobei die Struktur Folgendes umfasst: einen langgestreckten Holm, wobei mindestens ein Teil der Länge des Holms (10) derart ausgelegt ist, dass ein Querschnitt davon, der quer zur Länge (14) des Holms genommen wird, eine erste Seitenwand (12), eine zweite Seitenwand (16), einen ersten Hohlflansch, der von der ersten Seitenwand (17) absteht, einen zweiten Hohlflansch (18), der von der zweiten Seitenwand (16) absteht, und eine Stirnwand (20) festlegt, die sich zwischen der ersten und zweiten Seitenwand (12, 16) erstreckt, wobei der Holm (10) ferner derart ausgelegt ist, dass die jeweiligen Innenvolumina des ersten und zweiten Hohlflansches (14, 18) voneinander und von dem Innenteil des Restes des Holms (10) abgetrennt sind, **dadurch gekennzeichnet, dass** die Struktur ferner eine Rückwand (22) aufweist, die sich zwischen der ersten Seitenwand (12) und der zweiten Seitenwand (16) erstreckt, wobei mindestens ein Teil der Länge der Rückwand (22) einen Abstand von der Stirnwand (20) aufweist.

2. Struktur nach Anspruch 1, wobei die Flansche (14, 18) von ihren jeweiligen Seitenwänden (12, 16) und von der Rückwand (22) in einer Richtung quer zur Länge des Holms (10) abstehen und von ihren jeweiligen Seitenwänden (12, 16) und der Rückwand (22) durch einen Kanal getrennt sind, der sich in einer Richtung entlang der Länge des Holms (10) erstreckt.

3. Struktur nach Anspruch 1, wobei die erste und zweite Seitenwand (12, 16), die Stirnwand (20) und die Rückwand (22) eine Einfachauswölbung festlegen, die einen mittleren Teil des Holms (10) umfasst.

4. Struktur nach Anspruch 1, wobei die erste und zweite Seitenwand (12, 16), die Stirnwand (20) und die Rückwand (22) eine Mehrfachauswölbung festlegen, die einen mittleren Teil des Holms (10) umfasst.

5. Struktur nach Anspruch 4, wobei ein Teil der Länge der Stirnwand (20) eingekerbt ist, sodass der eingekerbte Teil näher an der Rückwand (22) liegt als der Rest der Stirnwand (20).

6. Struktur nach Anspruch 1 bis 5, wobei der Querschnitt ein geschlossener Querschnitt ist.

7. Struktur nach Anspruch 1 bis 5, wobei der Querschnitt ein offener Querschnitt ist.

8. Struktur nach Anspruch 1 bis 5, wobei mindestens eine der Seitenwände (12, 16) einen ersten ebenen Teil (26) und einen zweiten ebenen Teil (28) umfasst, der an den ersten ebenen Teil (26) derart in einer Winkelbeziehung anschließt, dass eine Bruchstelle (30) dazwischen festgelegt wird.

9. Struktur nach Anspruch 1 bis 5, wobei der Holm (10) aus Stahl, zum Beispiel einem ultrahochfesten Borstahl, hergestellt ist.

10. Struktur nach Anspruch 9, wobei der Stahl eine Dicke im Bereich von 0,5 bis 5,0 Millimeter aufweist.

11. Struktur nach Anspruch 1 bis 10, wobei die Struktur zumindest teilweise aus einem walzgeformten Grundmaterialblech hergestellt ist.

12. Struktur nach Anspruch 1 bis 11, wobei der Holm (10) als ein Stoßstangenholm für ein Motorfahrzeug ausgelegt ist.

13. Fahrzeug, das die Struktur nach den Ansprüchen 1 bis 12 aufweist.

14. Verfahren zur Herstellung einer energieabsorbierenden Struktur, die kontrollierte Knautscheigenschaften aufweist, wobei das Verfahren die Schritte umfasst: Bereitstellen eines Grundmaterialblechs, Formgeben des Grundmaterialblechs mindestens teilweise in einem Walzformungsvorgang, um so einen langgestreckten Holm (10) festzulegen, wobei mindestens ein Teil der Länge des Holms (10) derart ausgelegt ist, dass ein Querschnitt davon, der quer zur Länge des Holms (10) genommen wird, ausgelegt ist, eine erste Seitenwand (12), eine zweite Seitenwand (16), einen ersten Hohlflansch (14), der von der ersten Seitenwand (12) absteht, einen zweiten Hohlflansch (18), der von der zweiten Seitenwand (16) absteht, und eine Stirnwand (20) festzulegen, die sich zwischen der ersten und zweiten Seitenwand (12, 16) erstreckt, wobei der Holm (10) ferner derart ausgelegt ist, dass die jeweiligen Innenvolumina des ersten und zweiten Hohlflansches (14, 18) voneinander und von dem Innenteil des Restes des Holms abgetrennt sind, **dadurch gekennzeichnet, dass** der Holm ferner ausgelegt ist, dass eine Rückwand (22) vorgesehen ist, die sich zwischen der ersten Seitenwand (12) und der zweiten Seitenwand (16) erstreckt, wobei mindestens ein Teil der Länge der Rückwand (22) einen Abstand von der Stirnwand (20) aufweist.

## Revendications

1. Structure d'absorption d'énergie ayant des caractéristiques d'écrasement contrôlé, ladite structure comprenant : une poutre allongée, au moins une partie de la longueur de ladite poutre (10) étant configurée de telle sorte qu'une section transversale de cette dernière, prise transversalement à la longueur (14) de ladite poutre, définisse une première paroi latérale (12), une deuxième paroi latérale (16), une première membrure creuse faisant saillie à partir de ladite première paroi latérale (17), une deuxième membrure creuse (18) faisant saillie à partir de ladite deuxième paroi latérale (16), et une paroi avant (20) s'étendant entre lesdites première et deuxième parois latérales (12, 16), ladite poutre (10) étant en outre configurée de telle sorte que les volumes intérieurs respectifs desdites première et deuxième membrures creuses (14, 18) soient séparés l'un de l'autre et de la partie intérieure du reste de la poutre (10), **caractérisée en ce que** ladite structure comporte en outre une paroi arrière (22) s'étendant entre ladite première paroi latérale (12) et ladite deuxième paroi latérale (16), au moins une partie de la longueur de ladite paroi arrière (22) étant espacée de ladite paroi avant (20).

2. Structure selon la revendication 1, dans laquelle lesdites membrures (14, 18) font saillie à partir de leurs parois latérales respectives (12, 16), et à partir de la paroi arrière (22), dans une direction transversale à la longueur de la poutre (10), et sont séparées de leurs parois latérales respectives (12, 16) et de la paroi arrière (22) par un canal qui s'étend dans une direction le long de la longueur de la poutre (10).

3. Structure selon la revendication 1, dans laquelle lesdites première et deuxième parois latérales (12, 16), ladite paroi avant (20) et ladite paroi arrière (22) délimitent un lobe unique qui comprend une partie centrale de ladite poutre (10).

4. Structure selon la revendication 1, dans laquelle lesdites première et deuxième parois latérales (12, 16), ladite paroi avant (20) et ladite paroi arrière (22) délimitent un multi-lobe qui comprend une partie centrale de ladite poutre (10).

5. Structure selon la revendication 4, dans laquelle une partie de la longueur de ladite paroi avant (20) est en retrait de telle sorte que ladite partie en retrait soit plus proche de ladite paroi arrière (22) que le reste de ladite paroi avant (20).

6. Structure selon les revendications 1 à 5, dans laquelle ladite section transversale est une section transversale fermée.

7. Structure selon les revendications 1 à 5, dans laquelle ladite section transversale est une section transversale ouverte.

8. Structure selon les revendications 1 à 5, dans laquelle au moins l'une desdites parois latérales (12, 16) comprend une première partie plane (26) et une deuxième partie plane (28) qui se raccorde à ladite première partie plane (26) suivant une relation angulaire, de manière à définir un point de cassure (30) entre celles-ci.

9. Structure selon les revendications 1 à 5, dans laquelle ladite poutre (10) est fabriquée en acier, par exemple en un acier au bore à très haute résistance.

10. Structure selon la revendication 9, dans laquelle ledit acier a une épaisseur dans la plage de 0,5 à 5,0 millimètres.

11. Structure selon les revendications 1 à 10, dans laquelle ladite structure est fabriquée, au moins en partie, à partir d'une tôle laminée de matière première.

12. Structure selon les revendications 1 à 11, dans laquelle ladite poutre (10) est configurée en tant que poutre de pare-chocs pour un véhicule à moteur.

13. Véhicule qui comporte la structure selon les revendications 1 à 12.

14. Procédé de fabrication d'une structure d'absorption d'énergie ayant des caractéristiques d'écrasement contrôlé, ledit procédé comprenant les étapes de : fourniture d'une tôle de matière première ; façonnage de ladite tôle de matière première, au moins en partie, par un processus de laminage de manière à définir une poutre allongée (10), au moins une partie de la longueur de ladite poutre (10) étant configurée de telle sorte qu'une section transversale de cette dernière, prise transversalement à la longueur de ladite poutre (10), soit configurée pour définir une première paroi latérale (12), une deuxième paroi latérale (16), une première membrure creuse (14) faisant saillie à partir de ladite première paroi latérale (12), une deuxième membrure creuse (18) faisant saillie à partir de ladite deuxième paroi latérale (16), et une paroi avant (20) s'étendant entre lesdites première et deuxième parois latérales (12, 16), ladite poutre (10) étant en outre configurée de telle sorte que les volumes intérieurs respectifs desdites première et deuxième membrures creuses (14, 18) soient séparés l'un de l'autre et de la partie intérieure du reste de la poutre, **caractérisé en ce que** ladite poutre est en outre configurée de telle sorte qu'une paroi arrière (22) soit prévue, laquelle s'étend entre ladite première paroi latérale (12) et ladite deuxième paroi latérale (16), au moins une partie de la longueur de ladite paroi arrière (22) étant espacée de ladite paroi avant (20).
